# EUROPEAN PATENT APPLICATION

(11) **EP 3 591 375 A1**
(43) Date of publication of application: **08.01.2020**
(21) Application number: 18181567.1
(22) Date of filing: 04.07.2018
(51) Int. Cl.: G01N 3/08

(54) **APPARATUS, SAMPLE AND METHOD FOR TENSILE TESTS, ESPECIALLY UNDER HYDROGEN**

(71) Applicant: TesTneT Engineering GmbH, 85748 Garching (DE)
(72) Inventor: Herr, Marius, 80803 München (DE); Stanglmayr, Ida, 84416 Moosen (Vils) (DE)
(74) Representative: Winter, Brandl, Fürniss, Hübner, Röss, Kaiser, Polte - Partnerschaft mbB

(57) **Abstract**

The present invention discloses a sample 1, a test apparatus and a method especially suitable for stress-strain testing under hydrogen embrittlement. The sample 1 is to be mounted between a fixed traverse 20 and a moveable traverse 30 supported in a lower traverse 40 of the test apparatus via threads 14, 15 for stress-strain testing, and comprises a blind hole 16 into which a first fluid can be introduced into sample 1 for increasing embrittlement via a through hole 22 in a fixed traverse 20 of the test apparatus fluid-tightly connected to the opening of the blind hole 16. The test apparatus comprises a fluid-tight space 60 located between a wall 61 and the fixed and lower traverses 20, 40. Into said space 60 a second fluid may be introduced through a second fluid entrance 62, and the sample can be mounted between the fixed traverse 20 and the moveable traverse 30 within said space 60. The apparatus and method according to the invention need less fluid influencing the test sample during testing.

## Description

### Technical Field

The present disclosure relates to an apparatus, a method and a novel sample for tensile tests in a specific environment, especially under hydrogen.

Commonly tensile tests for materials are performed in so called universal testing machines or tensile testing machines. To this purpose, samples, which are test-pieces, are fixed to two traverses, which then are pulled apart. From the behaviour of the samples a stress-strain diagram is determined, which allows to derive specific material characteristics.

Usually the samples are tested in air, so that embrittlement, corrosion and similar issues do not apply. In order to examine behaviour under corrosive and similar environments, the sample may be immersed into a specific, e.g. corrosive medium.

In view of increased interest in hydrogen for use as fuel e.g. in the automobile industry, in recent times steel is tested in a hydrogen atmosphere. As is well-known, diffusion of hydrogen into some steels may lead to embrittlement and thus to amended characteristics which should be examined and documented.

Therefore a tensile test under hydrogen atmosphere is performed otherwise similar as in the structure mentioned above. The relevant parts of the universal testing machine (especially the upper and lower traverses to which the samples are fixed for tensile testing and especially the samples themselves) are immersed in a high pressure hydrogen atmosphere typically having, e.g., 100 MPa partial pressure of H2. This may preferably be done in an autoclave. The hydrogen enters into the samples during (and before) the actual tensile test and induces the embrittlement to be examined.

However, using this method a comparatively big volume (the whole inner space of the testing apparatus) has to be filled with high pressure hydrogen, which may lead to risks of cracking, bursts and ignition. Moreover, hydrogen is very volatile, so that the above-mentioned ignition risk has to be reduced by suitable precautions like ventilation and suction piping around the apparatus.

The Fraunhofer-Institut für Werkstoffmechanik (IWM) therefore suggests, in an internet publication named "Hohlproben - Eine Alternative zur Autoklaventechnik" (https://www.iwm.fraunhofer.de/content/dam/iwm/de/geschaeftsfelder/werkstoffbewertu ng-lebensdauerkonzepte/mikrostruktur-eigenspannungen/wasserstoffversproedungmetallischerwerkstoffe/Hohlproben Autoklaventechnikid 2018 q71 FraunhoferIWM.pdf), which is considered as closest prior art forming the basis for the preambles of the independent claims, to use a hollow (e.g. drilled-through) sample instead of a massive sample immersed in fluid from the outside in an autoclave as commonly used. High pressure hydrogen (a pressure of up to 200 bar is mentioned) is introduced into the borehole of the sample. Due to the much smaller hydrogen-filled volume (inside the sample instead of inside the whole autoclave), the amount of hydrogen needed is reduced. Moreover, hydrogen sealing is necessary only at the longitudinal ends of the hollow sample where hydrogen is introduced into the borehole. One of the two openings of the borehole is connected to a flexible hydrogen supplying connection, which is able to move during the stress-strain test, the other one is connected to a fixed hydrogen supplying connection.

However, as the sample breaks during the stress-strain test performed, high pressure hydrogen leaks into the environment and has to be suctioned away to avoid the (ignition and burst) problems described above. Furthermore, especially shortly before the end of the tensile test, the high pressure hydrogen within the sample exerts pressure on the comparatively thin remaining cross-section, which may lead to bulging and cracks earlier than to be expected during a "standard" test using a massive sample immersed into hydrogen, thus distorting the results of the tensile test due to additional shear stress, or even - if brittleness is significantly increased or the strength of the sample is low, like in a resin sample - to bursting of the sample due to high internal pressure.

Several further testing methods to check hydrogen embrittlement are discussed in patents and utility model documents like SU 1185166 A, CN 105 973 711 A, US 8 453 515 B2 or JP H08 145 862 A. However, these documents in general suggest burst test methods for disks, or only teach how to supply hydrogen to provide reproducible embrittlement conditions, and are silent with regard to the common stress-strain test samples.

The present invention is intended to minimize the above-discussed problems as far as possible and to provide a method, a testing equipment and a sample which avoid said problems as far as possible.

The present invention comprises a basically well-known universal testing machine modified to become an apparatus for tensile testing as disclosed in claim 1.

An end surface of a sample having a blind hole may be immersed in a first fluid, like hydrogen, through one longitudinal end fixed to a fixed traverse of a frame structure of the apparatus, when the sample is tested. The fixed traverse of the apparatus works as a first holding means and comprises a through-hole through which the first fluid may be supplied to an inside of a blind hole prepared in the sample. A barrel gasket seals between the longitudinal end of the sample and the fixed traverse such that no fluid passes through the gasket. As the fluid supply does not have to be mobile, a more stable fluid supply can be used, thus further decreasing costs.

Moreover, according to the invention the sample is introduced in a fluid-tight space during tensile testing. Said space is limited by the fixed traverse, the lower traverse, and a surrounding wall (or walls) and filled with a second fluid, and preferably filled with a liquid, e.g. water, under a suitable pressure (i.e. a pressure about equal to the pressure of the first fluid inside the sample). The second fluid may also be the same as the first fluid. Said space thus forms an autoclave. The liquid pressurizes the sample during the tensile test from outside. Therefore, until the sample breaks, basically no shear strain induced by the pressure within the sample affects the sample characteristics. In addition, if the sample is still somewhat ductile, but receives cracks shortly before complete destruction, the fluid supply may be stopped, reducing the danger of bursts. Moreover, the possibility of ignition of hydrogen (or other gas) as a first fluid in water (or other liquids hardly inflammable) as a second fluid is reduced. On the other hand, fluid pressures within (and/or around) the sample may be used as single load, i.e. without inducing a load for tensile testing via the moveable traverse. Especially for materials with comparatively low strength like resins, an internal or external pressure may alone be sufficient for stress tests based on bursting without tensile stress testing.

The other end of the sample is fixed to a moveable traverse as a second holding means. This means is intended to transmit a force to induce the intended stress of the sample. In one preferred embodiment, the moveable traverse is mounted to a pipe, but it may also be fixed to a massive rod. The pipe or rod is supported in a lower traverse such that it is moveable in its axial direction. Fixing the moveable traverse to a pipe makes it possible to attach measurement gauges and similar measurement devices for recording, e.g., deformation of the sample, directly at the end of the sample, thus reducing measurement errors. Wiring of said sensors may be lead to the outside of the apparatus through the pipe. As an alternative to using a rod, the moveable traverse could be formed as a piston sealing the part of the autoclave in which the sample is located, so that the pressure of the second fluid may at the same time be used to exert the tensile force on the sample. In such a case, damping between the moveable traverse and the lower traverse has to be provided.

In contrast to the prior art discussed above, in which the massive sample is immersed into pressurized gas (e.g. hydrogen) from the outside, the present application has the advantage that the water (liquid) under pressure, in which the sample is immersed, is much less volatile than, e.g., hydrogen. Consequently, the space around the sample can be sealed comparatively easy. In addition, due to the comparatively small volume inside the sample less hydrogen is needed. Finally, if the (liquid) pressure outside the sample about equals the high hydrogen pressure inside the sample, after breaking the sample less hydrogen emerges from the fracture than in the prior art testing methods discussed above.

Furthermore, the invention comprises a test sample according to claim 9 or one of subclaims 10 to 13 for use in the above-mentioned apparatus, said sample comprising a blind hole suitable for a fluid-tight connection with a through-hole in the fixed traverse. Thus, pressurized hydrogen can be introduced into the sample through said fixed traverse.

The invention moreover comprises a method of testing a sample in the above-mentioned testing machine according to claim 15 or one of the corresponding subclaims.

In an advantageous embodiment of said method, the volume of the blind hole of the sample is partially filled by a displacer. The displacer may fill, e.g., between three quarters and nine tenths of the blind hole. Thus, a further reduced amount (one quarter to one tenth in the example) of hydrogen (or other fluid influencing the sample) is needed in the apparatus to induce the same effects regarding embrittlement (or perhaps strengthening or other issues to be examined) of the sample. Accordingly, the dangers of bursts and ignition are further reduced.

Similarly, also the space around the sample may be partially filled by some displacer. This might be especially advantageous if it is desired to reduce the amount of fluid used around the sample, e.g. in case some expensive or toxic fluid should be used around the sample, or in case it is simply desired that as few fluid as possible is used around the sample for other reasons. Also said displacer may fill a predetermined part of the volume, like three quarters to nine tenths of the volume.

The system as a whole may furthermore comprise facilities to control the temperature of the sample and its surroundings, although this is not described in more detail. The temperatures may range from low temperatures, at which gases in the system may liquefy, to high temperatures as long as these do not damage the test system. A corresponding temperature control may be performed by control of the temperature of the fluids introduced into the system.

Further advantageous embodiments are disclosed in the claims.

### Brief description of the drawings

Fig. 1 is an illustration of an example of the system according to a first embodiment of the present apparatus suitable for hydrogen embrittlement testing.
Fig. 2 is an illustration of a sample used in the system of Fig. 1.

### Description of an advantageous embodiment

In the following an embodiment of the present invention is described based on the figures.

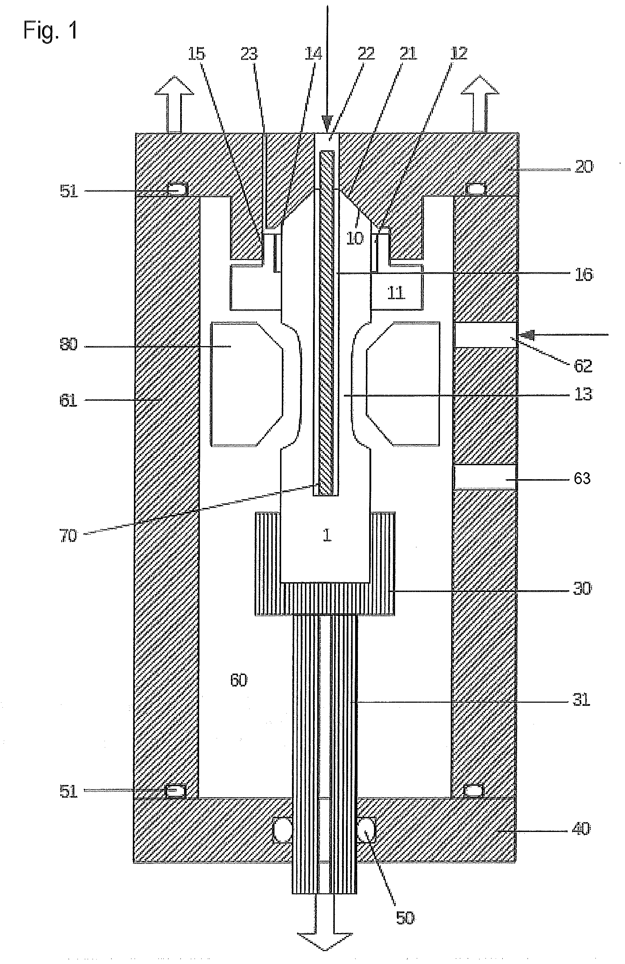

Fig. 1 shows a schematic structure of an embodiment of the present invention. A sample 1 made of a steel susceptible to hydrogen embrittlement, is (in Fig. 1 on the upper side) fixed to a fixed traverse 20, working as a first holding means for a first longitudinal end of the sample 1, via a pressure ring 11 and a pressure bolt 12, which will be discussed later in more detail. The sample 1 has an outer cone 10 at its first longitudinal end (upper side in the figure), which seals fluid-tightly with an inner cone 21 of the fixed traverse 20. A weep hole 23 leads from a location at the inner cone 21 to the outside. Said weep hole 23 known from the prior art serves to drain a very small amount of gas which may overcome the seal structure between the cones 10, 21, if necessary.

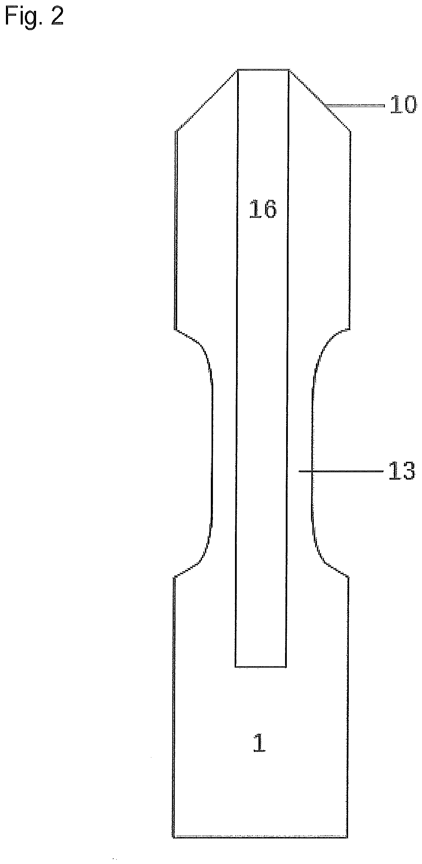

At the second longitudinal end of the sample 1 (lower side of sample 1 in Fig. 1) the sample 1 is fixed to a moveable traverse 30 working as a second holding means, e.g. via a thread (described in detail later based on Fig. 2). The moveable traverse 30 is fixed to a pipe 31, which may be replaced by a massive rod, or some other means suitable to exert a suitable force (directed downward in the figure) on the sample 1 for the stress-strain test. Said rod or pipe 31 is moveable in the axial direction of the sample 1 and can induce a tensile load onto the sample 1. The rod or pipe 31 is supported in a lower traverse 40 of the apparatus via seals (only one seal is shown in the figure) 50 in a fluid-tight and axially movable manner. Although not shown, the rod may carry sensors like force and path transducers to record a stress-strain diagram. When using pipe 31, transducers can be directly attached to the bottom of the sample 1, and wirings of the sensors may be conducted to the outside via said pipe 31.

The fixed traverse 20 comprises an upper flange for pressure supply. The fixed traverse 20, the lower traverse 40, and a schematically shown surrounding wall (or walls) 61 connecting the fixed and lower traverses, together with seals 50, located between pipe 31 and the lower traverse 40, and 51, located between the fixed traverse 20 and the surrounding wall 61, and between the lower traverse 40 and the wall 61, provide a fluid-tight space like an autoclave, into which, in this embodiment, pressurized water as a second fluid is introduced through opening 62 via a suitable pressure pipe system (not shown) before starting the tensile test.

A sealable venting tube 63, here depicted in wall 61 and leading through the walls or one of the traverses 20, 40, is provided at some location so as to vent air or other fluids contained in the fluid-tight space 60 when introducing the pressurized fluid. Although not shown in detail, the venting tube may contain some valve for closing the venting tube as soon as the fluid to be displaced has left the fluid-tight space 60 through said tube. Pressurizing is done in order to balance shear stresses in the sample 1 induced by the hydrogen introduced into the blind hole 16 of said sample 1, as discussed with respect to the prior art. Thus, the second fluid pressure (water pressure) outside the sample according to this embodiment is chosen to equal the first fluid pressure (hydrogen pressure) inside a blind hole 16 of sample 1 described below in detail. Although not shown in the figures, it is advisable to provide a pressure connection between the first and second fluid supply systems, e.g. by introducing, in parallel to the apparatus, some part like a bubble accumulator filled at one port with the first fluid, and at another port on another side of the accumulator with the second fluid, and separating the two sides either by a membrane, or simply by their own different densities when providing the port for the denser fluid below the port for the less dense fluid, leading to an equal pressure of the two fluids introduced into the apparatus. However, in principle it may also be feasible to use different pressures for the first and second fluid, e.g. by providing a spring-supported membrane between said fluids.

Finally, Fig. 1 shows a displacer 70 (explained below in more detail) inside the blind hole 16 of sample 1. Said blind hole 16 is connected to a through-hole 22 in the fixed traverse 20 via the inner cone 21 and the outer cone 10. As mentioned above already, a similar displacer 80 may also be provided in the fluid-tight space 60 around the sample in order to reduce the amount of liquid around sample 1 in the space 60.

As may be gathered from Figs. 1 and 2, sample 1 comprises the blind hole 16, which reaches from the upper flange 10 at least through a narrowed portion 13 of sample 1 to the downside in Fig. 1, which narrowed portion 13 is stretched (and ultimately broken) during the tensile test, such that the blind hole ends in the second longitudinal end of the sample 1 fixed to the moveable traverse 30 well below the narrowed portion. Preferably it should be avoided to provide a blind hole ending in or close to the tapered portion to avoid additional stress inaccuracies within the sample 1. In order to reduce the hydrogen-filled volume of blind hole 16, a displacer 70 may be introduced into the blind hole 16. Using displacer 70 further reduces the amount of hydrogen needed and thus the dangers of ignition and ruption.

Furthermore, sample 1 shown in more detail in Fig. 2 comprises a left-handed male thread 14 at the end of the opening of blind hole 16 (upper end in Fig. 1) and a common right-handed male thread 15 at its other end. Thread 15 is threaded into a corresponding female thread at the moveable traverse 30 (see Fig. 1). Pressure bolt 12, which also comprises a male thread, can slide over male thread 14 of the sample 1 due to a through-hole in bolt 12 corresponding to the maximum diameter of the sample, and is thus mounted on sample 1. Pressure ring 11 having an outer diameter larger than the inner diameter of the through-hole of bolt 12, is then threaded on corresponding (left-handed) male thread 14 of the sample 1. Next, pressure bolt 12 is slid back until it is stopped by pressure ring 11. Pressure bolt 12 is then threaded into a corresponding (right-handed) female thread of the fixed (upper) traverse 20. Via pressure bolt 12 (together with pressure ring 11 and thread 14) pressure is exerted on the sealing faces of the outer cone 10 of the sample 1 and the inner cone 21 of the fixed traverse 20 to seal the connection between inner cone 21 and outer cone 10, because during turning bolt 12 to tighten it at its outside, at the same time pressure ring 11 receives a slight moment tightening it (on the left-hand thread) to bolt 12. Although this has not been shown in the figures, the connection between thread 15 and the moveable traverse 30 may be replaced by a combination similar to pressure ring 11, pressure bolt 12, and left-handed thread 14 fixed to a moveable traverse prepared similar to the fixed traverse discussed above. This way, both ends of the sample may be manufactured similarly (i.e. identical with the exception of blind hole 16), and therefore manufacturing the sample can be made easier.

To finish the mounting procedure in preparation of the stress-strain test, the tensile pipe 31 is inserted through the support in the lower traverse 40 including seals 50, and the fixed traverse 20 and the walls 61 on the upper side are connected to provide a fluid-tight connection via seals 51 to form the fluid-tight space 60. Although not shown, said fluid-tight connection between the walls 61 and the traverses 20, 40 may be further strengthened e.g. by threads, brackets or other similar measures well-known to skilled persons. In order not to weaken the wall 61 by screw holes and the like, preferably (although not shown) a second sleeve around the wall 61 is provided, and diameters of the lower traverse and the upper traverse are increased, so as to provide enough space for screws and bolts threaded into said sleeve to secure the fluid-tight connection between traverses 20, 40 and the (inner) wall 61. Again, it might be advantageous to prepare for some degassing between said walls, e.g. to provide a (sealable) hole, e.g. in said sleeve or one of the traverses 20, 40 leading to the space therebetween. Although shown otherwise in the "one-walled" embodiment, furthermore the second fluid entrance may be provided in the fixed traverse 20 and/or lower traverse 40, especially when these are enlarged to provide for the outer wall. In such a case, there is no need to penetrate both said outer and inner wall for said liquid supply, leading to a more stable configuration.

In order to prepare a precise tensile test, it is preferable to first calibrate the apparatus by simulating a "tensile test" without a sample and/or fluid supply. By doing so, the resistances within the apparatus like friction at the seals may be gathered to cancel the resulting forces from calculations based on later measurements.

Before (for a predetermined time) and during the actual tensile test the opening of said blind hole 16 is connected with a high pressure hydrogen source (or other fluid source) via the above-mentioned fist fluid entrance 22 (visualized by a black arrow on the upper side in Fig. 1), preferably providing hydrogen at a first pressure of, e.g., up to 100 MPa. Usually, at the same time, a second fluid (e.g. water) under a second pressure is introduced into the fluid-tight space 60 via second fluid entrance 62. Preferably, the first and second fluid pressures are identical. Due to the first fluid pressure of hydrogen, the walls of sample 1 are contaminated with hydrogen to embrittle it. In case of resin samples or other samples with comparatively low strenght, the pressure of the liquid inside the sample might, on its own, be used for burst tests, and a pressure difference between said first and second pressures may be created accordingly for such a purpose. After a predetermined time of hydrogen contamination of the sample, the actual tensile test is started.

The pressure of the second fluid (e.g. water) is introduced into the space around sample 1 through fluid entrance (opening) 62, so as to compensate shear stress induced by the first fluid, e.g. high pressure hydrogen (visualized by a black arrow from the right at fluid entrance 62 in Fig. 1). As mentioned above, preferably some pressure balance between the first and second pressures, i.e. inside and around the sample, is provided.

The tensile test is then started by exerting a force on moveable traverse 30 (downward as shown by a framed arrow in Fig.1). Said force is transduced to sample 1 via male thread 15, and the elongation of the sample as well as the force used is measured to create a stress-strain diagram.

The present invention has been described based on an example embodiment suitable to examine hydrogen embrittlement of steel samples. Of course several variations are possible within the scope of the claims. As an example, the liquid does not have to be water, and may also be some oil or a corrosive liquid to alter test circumstances, e.g. to cause embrittlement also from the outside of the sample, or may be some gas to study the stress-strain behavior of the sample under respective conditions. Moreover, although in the preferred embodiment only hydrogen embrittlement has been discussed, of course also other gases and/or liquids may be introduced into blind hole 16 as a first fluid before and during the stress test to test susceptibility of sample 1 to such fluids. Furthermore, although sample 1 of the embodiment has been described as a steel sample to undergo hydrogen embrittlement tests, it may be made of any other material for which the stress-strain test under embrittlement conditions should be performed, e.g. resin as a material also already mentioned above.

While for explanatory purposes throughout the description and the claims a "lower" and "upper" traverse are mentioned based on the relation of the traverses in the apparatus depicted in Fig. 1, there is no need to perform the test in which the sample longitudinal direction is a vertical direction. It is also possible to provide the force needed for the stress-strain test in a left-right or front-back direction instead of an up-down direction as described above, as long as the stress is induced in the longitudinal direction of the sample.

### Reference numbers

- 1: sample (test-piece)
- 10: outer cone of sample 1
- 11: pressure ring
- 12: pressure bolt
- 13: narrowed portion (of sample 1)
- 14: left-handed male thread
- 15: common (right-handed) male thread
- 16: blind hole (in sample 1)
- 20: fixed traverse (first holding means)
- 21: inner cone of fixed traverse
- 22: through-hole in fixed traverse, first fluid entrance
- 23: weep hole
- 30: moveable traverse (second holding means)
- 31: tensile rod or pipe
- 40: lower traverse
- 50: seal (between lower traverse 40 and rod or pipe 31)
- 51: seal (between surrounding wall 61 and fixed traverse 20/lower traverse 40)
- 60: fluid-tight space (autoclave)
- 61: surrounding wall
- 62: opening (second fluid entrance)
- 63: venting tube
- 70: displacer (in sample 1)
- 80: displacer (in fluid-tight space 60)

## Claims

1. Apparatus for tensile testing of a sample (1), comprising:
a frame structure including
- a first holding means (20) for holding a first longitudinal end of the sample (1),
- a second holding means (30) for holding a second longitudinal end of the sample (1), said second holding means (30) being moveable relative to the first holding means (20) in an axial direction of the sample (1),
**characterized by**
a fluid-tight space (60) housing said frame structure,
the first holding means (20) forming a supporting surface which fluid-tightly surrounds a first fluid entrance (22) penetrating the first holding means (20),
the supporting surface being configured to support an end surface of the first longitudinal end of the sample (1),
said first fluid entrance (22) is configured to supply a first fluid to the end surface of the sample (1),
and in that
the fluid-tight space (60) comprises a second fluid entrance (62) configured to supply a second fluid into the fluid-tight space (60) which surrounds the sample (1), and a sealable fluid exit.

2. Apparatus according to claim 1,
wherein the fluid-tight space (60) comprises an upper wall including the first holding means (20) and the first fluid entrance (22), a lower traverse (40) and a surrounding wall (61),
said lower traverse (40) comprising a fluid-tight support for a rod or pipe (31) connected to the second holding means (30), said support supporting said rod or pipe (31) such that said rod or pipe (31) is axially movable relative to the lower traverse (40), and said support fluid-tightly sealing the rod or pipe (31) relative to the lower traverse (40) via at least one seal (50), and
said second fluid entrance (62) and said sealable fluid exit are provided in said surrounding wall (61).

3. Apparatus according to claim 1 or 2, wherein at least one of the first fluid entrance (22) and the second fluid entrance (62) is connectable to a high pressure fluid source.

4. Apparatus according to any one of the previous claims, wherein the apparatus comprises modules respectively forming the upper wall, the lower traverse (40), the surrounding wall (61), the moveable traverse (30) and the rod (31).

5. Apparatus according to any one of the previous claims, wherein the first holding means (20) comprises a frustroconical surface (21) around the first fluid entrance (22), and a female thread close to said surface.

6. Apparatus according to claim 5, wherein a weep hole (23) is provided close to the surface (21) of the first holding means (20).

7. Apparatus according to any one of the preceeding claims, wherein the moveable traverse (30) is fixed to a pipe (31).

8. Apparatus according to any one of the preceeding claims, wherein at least one of the first and second fluid is a liquid.

9. Sample (1) for tensile testing, having
a longitudinal axis,
a first longitudinal end,
a second longitudinal end,
and
**characterized by** an axially extending blind hole (16) opening at the first longitudinal end, and extending through the narrowed middle part to a location within the second longitudinal end.

10. Sample (1) according to claim 9, further comprising an outer sealing cone (10) around the blind hole (16) able to seal, together with an inner cone (21) of the apparatus for tensile testing according to one of claims 1 to 8, a connection of the blind hole (16) to a high-pressure fluid source.

11. Sample (1) according to one of claims 9 or 10, further comprising a left-handed male thread (14) at the first longitudinal end, a right-handed male thread (15) at the second longitudinal end, and a tapered portion (13) between said threads (14, 15).

12. Sample (1) according to one of claims 9 or 10, further comprising similar threads at both longitudinal ends.

13. Sample (1) according to any one of claims 9 to 12, further comprising a tapered middle portion narrower than the first and second longitudinal end, wherein the blind hole (16) is elongated through the tapered portion (13) to reach up to a location inside the second longitudinal end.

14. Combination of an apparatus according to any one of claims 1 to 8 and a sample according to any one of claims 9 to 13, wherein one end surface of the first holding means (20) and one longitudinal end surface of the sample (1) form conical surfaces which are complementary to one another.

15. Method for tensile testing a sample according to one of claims 9 to 13 using an apparatus according to one of claims 1 to 8, comprising the following steps:
fixing said sample (1) to the first holding means (20) and the second holding means (30),
fluid-tightly sealing a connection between an opening of the blind hole (16) in the sample (1) and the through-hole (22) of the first holding means (20),
introducing a first fluid from the fluid source into the blind hole (16) at a first predetermined pressure, and at the same time
introducing a second fluid into the space around the sample (1) through a liquid entrance (60), and increasing the pressure of the second fluid to a second predetermined pressure,
waiting a predetermined time for the first and second fluid to interact with the sample,
inducing a tensioning force in the sample (1) by axially moving the second holding means (30) fixed to the sample (1) to start a tensile test of the sample (1),
measuring stress and strain of the sample (1) induced by said tensioning force,
stopping the tensile test and reducing the first and second fluid pressure when arriving at a predetermined condition, and
disassembling the sample (1) from the apparatus and analysing the sample (1).

16. Method according to claim 15, further comprising the step of introducing a displacer (70) into the blind hole (16) of the sample (1).

17. Method according to claim 15 or 16, **characterized in that** the fluid introduced into the second fluid entrance (62) of the fluid-tight space (60) is held at the pressure of the fluid introduced into the blind hole (16) of the sample (1).
